# EUROPÄISCHE PATENTANMELDUNG

(11) **EP 2 320 358 A2**
(43) Veröffentlichungstag der Anmeldung: **11.05.2011**
(21) Anmeldenummer: 10185208.5
(22) Anmeldetag: 10.04.2006
(51) Int. Cl.: G06N 5/02

(54) **Computerimplementiertes Verfahren zum automatischen wissensbasierten Erzeugen von anwenderrelevanten Daten**

(30) Priorität: 08.04.2005 DE 102005016290
(62) Teilanmeldung aus: 06725693.3
(71) Anmelder: Definiens AG, 80339 München (DE)
(72) Erfinder: Schmidt, Günter, 80339 München (DE); Schäpe, Arno, 80339 München (DE); Binnig, Gerd, 80339 München (DE)
(74) Vertreter: Winter, Brandl, Fürniss, Hübner, Röss, Kaiser, Polte - Partnerschaft

(57) **Zusammenfassung**

Das beschriebene computerimplementierte Verfahren zur automatischen wissensbasierten Erzeugung von Daten aus einer Tabelle weist gemäß einem oder mehreren Ausführungsbeispielen die Schritte auf:
Definieren einer ersten Klasse der Klassenhierarchie, die eine Gruppe von Daten-Objekten einer Tabelle mit Hilfe einer ersten Klassenbeschreibung beschreibt,
Generieren eines hierarchisch übergeordneten Daten-Objektes, das eine Gruppe von Daten-Objekten aus der Tabelle repräsentiert, wobei für die Gruppe die erste Klassenbeschreibung zutrifft, und
Berechnen einer Eigenschaft des übergeordneten Objektes anhand der Eigenschaften der Daten-Objekte.

## Beschreibung

Automatische elektronische Datenverarbeitung gibt es seitdem es Computer gibt. Je komplexer die Aufgaben dabei wurden, also umso anspruchsvoller die Computerprogramme wurden, desto größer wurde auch die Anforderung an den Programmierer, ein fehlerfreies und funktionierendes Programm zu erstellen. Um dem Programmierer überhaupt in die Lage zu versetzen, Programme mit immer steigender Komplexität zu erstellen, war die Entwicklung von immer mächtigeren Computersprachen notwendig. Eine Zeile Code in Java, einer modernen Programmiersprache, z.B. hat eine wesentlich größere Mächtigkeit als eine Zeile in Maschinensprache.

Trotz der rasanten Entwicklung von Programmiersprachen gibt es dennoch heute eine Situation, dass selbst einfache intelligente Aufgaben von Computern nicht erfüllt werden können, wenn deren Komplexität ein gewisses Mass übersteigt. Dabei ist dieses kritische Mass eher bescheiden zu nennen, wenn man es mit der Komplexität vergleicht, mit der ein Mensch umzugehen vermag. Wenn es um einfache Zusammenhänge jedoch um große Datenmengen geht, ist der Computer dem Mensch zwar überlegen, wenn es jedoch um komplexe Zusammenhänge geht, versagt der Computer in der Regel auf sehr niedrigem Niveau.

Der Umstand komplexer Zusammenhänge ist vor allem dann gegeben, wenn Informationen vorwiegend implizit formuliert sind, wenn also nur unter Zuhilfenahme eines komplexen Wissens Informationen richtig bewerten werden können.

Beispiele für solche impliziten Informationen sind komplexe Tabellen, Texte, Graphiken, Bilder, Filme oder auch andere Datenarten. In all diesen Fällen braucht es Wissen oder sogar Fachwissen, um die Inhalte richtig deuten zu können. Sowohl die Bilder auf unserer Netzhaut als auch die digitalen Bilder einer Kamera liegen in Form von Pixelfeldern vor. Die sinnvollen Objekte in den Bildern, das, was die Bilder erst interessant macht, liegt nicht a priori in den Bildern vor, sondern entsteht erst in unserem Gehirn durch Deutung. Man nennt diesen Prozess der Deutung auch Wahrnehmung.

Es ist ein Aspekt der vorliegenden Erfindung, ein computerimplementiertes Verfahren zum automatischen wissensbasierten Erzeugen von anwenderrelevanten Daten zu schaffen, mit dem auf wirkungsvolle Weise durch Deutung implizite Informationen aus heterogenen Daten gewonnen werden können.

Mit der Erfindung wird ein computerimplementiertes Verfahren zum automatischen wissensbasierten Erzeugen von Daten aus einer Tabelle gemäß Anspruch 1 geschaffen.

Weitere vorteilhafte Ausgestaltungen der vorliegenden Erfindung sind Gegenstand der abhängigen Ansprüche.

Ausführungsbeispiele der Erfindung lösen die folgenden Probleme.
A. Erweiterung in Richtung Auto-Programmierung (Auto-Lernen) und Training.
B. Automatisches Segmentieren, Analysieren und Deuten von komplexen drei- und mehrdimensionalen Bildern, und Ermöglichen einer sinnvollen Visualisierung von Inhalten in dreidimensionalen Bildern und Filmen.
C. Ermöglichung der automatischen Deutung von komplexen Tabelleninhalten mit automatischer Segmentierung und Gruppierung der Inhalte (Generierung von nicht-vordefinierten Objekt-Netzen) und somit der Erkennung von wichtigen Zusammenhängen.
D. Automatische Deutung, Analyse und Indizierung von komplexen Textdokumenten.
E. Ermöglichung der Erstellung höchst komplexer "Business-Intelligence"-Software.
F. Automatische sinngetriebene intelligente Datenintegration und -analyse multi-modaler heterogener Daten (holistische Deutung von Daten).

Die vorliegende Erfindung wird nunmehr anhand eines Ausführungsbeispiels unter Bezugnahme auf die beiliegende Zeichung näher erläutert.

Es zeigt:
Fig. 1 eine grafische Darstellung von Objektklassen;
Fig. 2 ein Strukturdiagramm der Objektklassen in Fig. 1;
Fig. 3 eine grafische Darstellung der Objektklassen;
Fig. 4 ein Strukturdiagramm der Objektklassen in Fig. 3;
Fig. 5 eine 3D-Analyse eines MR-Bilds;
Fig. 6 ein Beispiel einer Tabellenkalkulation; und
Fig. 7 ein Beispiel einer Hierarchie.

Im weiteren Verlauf werden die folgenden Abkürzungen verwendet:
En -Einheiten = im Programmablauf benutzte Objekte und Verknüpfungen
CNT -cognition network technology = Prinzipien der neuen Computersprache
CN -cognition network = Netzwerk der Computersprachen-Objekte
CL -cognition language = neue Computersprache
CP -cognition program = Programmcode in CL
CM -cognition machine = Maschine mit lauffähigen CPs
PN -Programmnetz = alle wahrend des Programmablaufs vorkommenden Einheiten (En)
Prozesse = Segmentierprozesse

In vorliegenden Unterlagen geht es um die automatische Deutung von Inhalten in komplexen Daten mittels eines computerimplementiuerten Verfahren. Insbesondere geht es um die automatische Deutung von Tabellen, Bildern, Texten und Netzwerken. Die Anmeldung beschreibt dabei keineswegs nur die Struktur einer fertigen Lösung zur Datenwahrnehmung, sondern es soll vor allem ein Software-Werkzeug dargestellt werden, welches das Erstellen von komplexen Deutungen erst ermöglicht. Es wird hier somit eine neue Computersprache beschrieben, die speziell für die Deutung komplexer Inhalte in Daten wie Tabellen und andere Strukturen ausgelegt ist. Die innere Struktur dieser Sprache ist an die prinzipiellen Eigenschaften der menschlichen Denkstruktur angelehnt.

### Kontext

Die richtige Deutung von Inhalten in Daten setzt Wissen voraus. In konventionellen Computerprogrammen ist dieses Wissen implizit von dem Programmierer in das Programm in Form von Algorithmen eingebracht. Das Problem dabei ist, dass dieses Wissen über das gesamte Programm verteilt sein kann und in der Regel im Programm nicht sauber lokalisiert werden kann. Wissen und Prozesse sind miteinander verwoben. Dies nachträglich wieder zu entwirren ist für sehr komplexe Programme fast nicht mehr möglich. Damit sind Änderungen am Programm erschwert oder gänzlich unmöglich. In komplexen Zusammenhängen ist jedoch ein perfektes Funktionieren eines Programms nicht wirklich erreichbar und eine kontinuierliche Verbesserung des Programme über Wochen, Monate, Jahre oder sogar Jahrzehnte unbedingt erforderlich. Das größte Problem dabei ist die sogenannte Übertragbarkeit. Auch wenn das einwandfreie Funktionieren eines Programms auf einer großen Anzahl von Datensätzen erfolgreich getestet wurde, so treten fast immer noch nicht adressierte Probleme auf neuen Datensätzen auf. Dies hat mit der unüberschaubar großen Menge von unterschiedlichen Situationen in komplexen Zusammenhängen zu tun.

In den Anfängen der Computer war Soft- und Hardware auch miteinander verwoben. Es stellte einen großen Fortschritt dar, beides voneinander so zu trennen, so dass sie unabhängig voneinander verbessert werden konnte. Ganz analog stellt die Cognition-Language ein Verfahren dar, mit dessen Hilfe sehr anspruchsvolle und komplexe Programme geschrieben werden können und gleichzeitig Wissen und Prozesse einfach und bequem getrennt behandelt werden können.

Ein bisher bekanntes Verfahren mit einem Anspruch in diese Richtung stellen die Semantischen Netze dar. Hier wird Wissen durch die Struktur des semantischen Netzes repräsentiert und ein Computerprogramm nutzt dieses Wissen beim Behandeln einer Datenstruktur. Semantische Netze sind jedoch nicht als höhere Computersprache, sondern eher als Simulationswerkzeuge mit sehr eingeschränkten Ausführungsmöglichkeiten zu verstehen. Mit einer Computersprache muss, auch wenn nicht alle Lösungen optimal elegant behandelt werden können, doch zumindest jedes Problem prinzipiell gelöst werden können. Neue Prozesse in semantischen Netzen müssen in konventioneller Computersprache geschrieben werden. In CL sind einige grundlegende Prozesse in konventioneller Computersprache vordefiniert und implementiert. Diese Prozesse sind jedoch so generisch, dass neue Prozesse aus diesen generischen Bausteinen erstellt werden können. Nur um die Leichtigkeit und Eleganz des Programmerstellens immer weiter zu verbessern. werden auch immer wieder neue generische CL-Bausteine, die in konventioneller Sprache programmiert sind, hinzugefügt. Auch einige andere Aspekte, wie das Konzept der Domäne und das der Navigation durch Untermengen (siehe unten) fehlen in semantischen Netzen.

Um der hochstehenden Aufgabe gerecht werden zu können, zeichnet die neue höhere Computersprache, die "Cognition-Language" bzw. CL, folgende Eigenschaften aus:
Allgemeine Struktur der Sprache
   · CL ist eine themenspezifische "High-Level"-Sprache.
   · CL ist modular; Module (CL-Objekte) werden zu einem Programm zusammengefügt.
   · Es gibt Input-, und CL-Objekte.
   · Spezifischere CL-Objekte sind Wissens- und Ablaufobjekte.
   · Spezifischere Input-Objekte sind Inputdaten und aus ihnen generierte Objekte.
   · Wissens- und Ablaufobjekte können zu Wissens- und Ablaufhierarchien zusammengebaut werden.
   · Die Möglichkeit der Vernetzung aller Objekte führt letztlich zu einem hierarchischem Netz, dem fertigen Programm.
   · Das Programm transformiert schwach strukturierte Input-Daten in ein hierarchisches Netz von relevanten Input-Objekten.
   · Diese Transformation geschieht über eine große Anzahl von Zwischenschritten, in denen letztlich nichtrelevante Zwischenobjekte erzeugt werden, die sich nach und nach in die relevanten entwickeln.
   · Grundlegendes allgemeines und themenspezifisches Wissen ist in die Sprache fest eingebaut.
   · Grundlegendes Wissen prägt die nachfolgend beschriebenen Struktur der Sprache und spezifisches Wissen die speziellen, konkreten vordefinierten Bausteine, die Basismodule, die CL-Objekte.
   · Eine beliebige Anzahl von CL-Objekten kann ausgewählt, individuell mit Parametern oder Variablen versehen und durch hierarchische Vernetzung zu einem vollständigen Programm zusammengebaut werden.
   · Der Programmablauf und die Ergebnisse können visualisiert und damit auf ihre Qualität überprüft werden.
   Spezifische Struktur der Sprachen
   ·Anwendungbezogenes "Weltwissen", WW, und Programmabläufe (Abläufe) können getrennt formuliert werden.
   · WW und Abläufe können als hierarchische Netzstrukturen von Wissens-Objekten bzw. von Ablauf-Objekten aufgebaut werden.
   · WW-Hierarchie, und Ablauf-Hierarchie stellen zusammen das Programm dar.
   · Untermengen aller Formen von Objekten, Domänen, können manuell oder mittels Prozessen direkt oder indirekt selektiert werden.
   · Domänen dienen der lokalen Ausführung von Prozessen und anderen Algorithmen.
   · Domänen können Teil eines Programmablaufs wie Teil eines Wissenobjektes sein.
   · Indirektes Selektieren geschieht durch sequenzielles hierarchisches Selektieren mittels Navigation entlang von zum Teil vordefinierten oder ausgewählten Verknüpfungen.
   · Domänen können mittels Prozessen oder manuell in Objekte (hierarchisch höher geordnete Objekte) transformiert werden (Segmentierung des Inputs, des Wissens und der Abläufe).
   · Prozesse können auf Domänen lokal ausgeübt werden.
   · Abläufe und WW können gegenseitig aufeinander zugreifen und sich gegenseitig modifizieren.
   · Beziehungen zwischen Teilbereichen im WW, in den Abläufen wie in den Daten können formuliert und automatisch berechnet werden.
   · Das WW besteht aus Wissensobjekten, speziell: den Konzepten (Klassen), Verknüpfungskonzepten, Konzeptverknüpfungen, Markern, Objekt-Beschreibungen (Expressionen) und lokalen und globalen Variablen.
   · Die Ablaufhierarchie besteht aus Berechnungen, Bedingungen, unterschiedlichen Arten von Klassifikations- und Segmentations-Prozessen (den Prozessen) und aus Objekteigenschaftsberechnungen (Features) sowie einem Formeleditor für Features und Variablen.
   · Alle Objekte können manuell oder durch Prozesse miteinander verknüpft werden.
   · Unterschiedliche Datensätze können geladen werden und es können diese selbst oder ihre Komponenten durch Prozesse miteinander verknüpft werden.
   · Unterschiedliche Analyseergebnisse können geladen werden und es können diese selbst oder ihre Komponenten durch Prozesse miteinander verknüpft werden.
   · Unterschiedliche Wissenshierarchien können geladen werden und es können diese selbst oder ihre Komponenten miteinander verknüpft werden.
   · Verknüpfte simultane Analyse und Deutung unterschiedlicher bzw.
      heterogener Tabellen und anderer Arten von Daten wie Texte, Zahlen, Vektoren, Spektren, Bilder und Präsentationsdokumente kann durchgeführt werden.
   · Alle Objekte und Verknüpfungen können durch Prozesse oder manuell gelöscht werden.
   · Die Verknüpfung von Input-Objekten mit Wissensobjekten entspricht einer Klassifikation, die mit einem Marker einer Markierung, und die mit einer lokalen Variablen einer Attributisierung.
   · Nicht nur Input-Objekte sondern auch Wissensobjekte und Ablauf-Objekte können klassifiziert werden.
   · Ergebnisse können in Form von hierarchischen Objektnetzen oder in Form von Tabellen und Schaubildern exportiert werden.
   · Tabellen, Teilmengen davon und andere Datenobjekte können erzeugt und vernichtet werden bzw. geändert werden (z.B. neue Spalte hinzufügen, Spalten miteinander multiplizieren)
   · Untermengen einer Tabelle können über Prozesse in andere Tabellen eingefügt werden.
   · Wiederholte Programmabläufe (Loops bzw. Schleifen) können formuliert werden.
   · Unterprozesse können formuliert werden.
   · Ein Ablauf kann bedingungsabhängig einen Loop abbrechen und an andere Abläufe in beliebiger Position in der Ablaufhierarchie übergeben.
   · Allgemeine Daten, speziell auch Namen und Inhalte von Konzepten, oder noch spezieller auch Namen und Inhalte von Zeilen oder Spalten in Tabellenkonzepten der Wissenshierarchie, können aus Wissensobjekten über Variablen abgeholt und in andere Konzepte oder in Abläufen eingefügt und verwendet werden.
   · Namen der Zeilen oder Spalten von Tabellen, können über Variablen abgeholt und in Konzepten oder Abläufen oder anderen Tabellen eingefügt und verwendet werden.
   · Vernetzten Objekte können als hierarchisch übergeordnete Objekte aufgefasst werden, die Eigenschaften besitzen können und die wiederum zu hierarchisch höheren Objekten vernetzt werden können, usw.
      Visualisierung des Programmablaufs und der Ergebnisse
   · Alle Strukturelemente können graphisch dargestellt werden.
   · Der Ablauf des Programms kann dargestellt werden, indem die Evolution der Wissens oder Datenobjekte dargestellt werden kann.
   · Die Darstellung der Objekte kann in Form von (transparenter) Einfärbung geschehen, die ihrer Klassifikation, ihrer Markierung oder dem Wert eines Features oder eines Attributes entspricht. Auch der Umriss des Objekts und seine Position kann dargestellt werden.
   · Die Ähnlichkeit von Objekten oder eine andere Form ihrer Zusammengehörigkeit kann dargestellt werden, z.B. durch gleichartige Einfärbung.

Komplexe Daten insbesondere Tabellen, Bilder und Texte können automatisch mit Hilfe der Cognition-Language, CL, analysiert und gedeutet werden. Die CL besitzt eine Struktur, die das Erstellen höchst komplexer Lösungen aus dem Wahrnehmungsbereich sinnvoll unterstützt und damit überhaupt erst ermöglicht. Im Gegensatz zu konventionellen Verfahren wird aus den Datensätzen automatisch und schrittweise eine Evolution von Objekten bis hin zu einer hierarchischen Netzstruktur dieser Objekte erzeugt. Dabei besteht diese Objektstruktur nur zum Teil aus vordefinierten Datenblöcken der Daten. Unter Einbeziehung von abstraktem Wissen werden vielmehr die Objekte nach Sinnkriterien und nicht nach formalen Kriterien generiert. Hierdurch wird es möglich, aus den Datensätzen, wie z.B. Tabellen, automatisch Sinn und Bedeutung zu extrahieren. Die neue Computersprache ermöglicht das schnelle und bequeme Erstellen derartiger Programme mit Hilfe der beschriebenen aufeinander abgestimmten Strukturelemente.

Die automatisch generierten Analysen können Nutzern ergänzend zu ihrer eigenen Deutung als Entscheidungshilfe dienen. Sie können die Zeit für eine Analyse drastisch senken und ihre Qualität erheblich steigern. Die Tabellen und andere Daten können dabei heterogene Inhalte aufweisen, so dass sehr unterschiedliche Arten von Informationen zu einer Gesamtbeurteilung, einer Gesamtdeutung automatisch zusammengeführt werden können.

### Konkrete technische Realisierung

Die automatische Behandlung der Daten erfolgt durch ein Computerprogramm einer besonderen Struktur. Die detaillierte Struktur dieses Programms wird im Einzelnen weiter unten beschrieben. Die grobe Struktur des Programms aber setzt sich wie folgt zusammen.

Die drei wesentliche Bausteine dieser Programmstruktur sind:
1. die Input-Daten plus den aus diesen generierten Input-En.
2. die Programmsteuerung und
3. abstraktes und konkretes Wissen über Dateninhalte, Programmsteuerung und Wissen.

Es mag merkwürdig erscheinen, dass ein Programm Wissen über sich selbst enthält. Nur so werden jedoch Intelligenzleistungen ähnlich der eines Menschen erst möglich.

Zu den Input-Daten zählen die Input-Daten selbst, wie auch die aus ihnen prozedural generierten Objekte und ihre Verknüpfungen untereinander. Die Programmsteuerung repräsentiert und beschreibt die Dynamik des Programms, die, wenn einmal angestoßen, Berechnungen und Strukturveränderungen vornehmen. Im einfachsten Fall strukturiert die Programmsteuerung unter Verwendung des abstrakten Wissens die Input-Daten in eine neue Form. Dabei werden vor allem Untermengen der Input-Daten bestimmt, als Objekte mit Eigenschaften definiert und sowohl miteinander als auch mit dem Wissen vernetzt. In vielen Fällen werden die Objekte auch durch die Programmsteuerung mit Attributen versehen.

Im allgemeinen Fall hingegen werden beim Ablauf der Programmsteuerung nicht nur die Input-Daten sondern auch Wissen und selbst die Programmsteuerung umstrukturiert. D.h. die Programmstruktur insgesamt verändert sich inputabhängig selbst. Die Veränderung der gesamten Programmstruktur wird genau dann notwendig, wenn alle drei Komponenten, Wissen, Daten und Programmsteuerung, sich aneinander anpassen müssen, um einen sinnvollen Programmablauf zu garantieren. Dieser Umstand liegt z.B. dann vor, wenn aus den Daten automatisch neues Wissen und neue Prozesse generiert werden müssen, wenn also nicht jede mögliche Situation in den Input-Daten in Form einer konkreten Programm- und Wissensstruktur vordefiniert werden kann, sondern wenn diese über Programmsteuerungsschritte erst gebildet werden können. Auf diese Weise kann 1. ein Programm noch flexibler auf Inputdaten eingestellt werden und 2. kann somit ein sich selbst optimierendes Programm (Wissen plus Programmsteuerung) erstellt werden, das möglicherweise nur auf einem Trainingsdatensatz sich selbst optimiert und anschließend in dieser optimierten Form fest eingestellt auf anderen neuen Datensätzen ablaufen gelassen wird.

Neben diesem allgemeinen Vorgehen besteht der Inhalt dieser Erfindung in der Struktur einer neuen Programmiersprache, die ein schnelles und einfaches Programmieren in eben dieser Vorgehensweise ermöglicht. In dieser objekthaften Sprache gibt es drei grundlegende Arten von Objekten: Input-, Ablauf- und Wissens-Objekte. Zudem gibt es eine Reihe spezieller, untergeordnete, Objekte, von denen neben eher konventionellen, wie Objekteigenschaften und mathematischen Ausdrücken, drei Ablauf-Objekte besonders betont werden sollen.

Wichtige spezielle Ablaufobjekte sind Variablen, Selektionsprozesse (Bestimmung von Untermengen der gesamten En-Menge, kurz Domänen) und Strukturierungsprozesse (kurz Prozesse). Prozesse erzeugen, vernichten und verändern Objekte und Verknüpfungen in der gesamten Programmstruktur. Domänen erzeugen und vernichten (verändern) Teilmengen der gesamten Programmstruktur. Die Prozesse werden mit Domänen verknüpft und sind dann nur auf diesen Untermengen aktiv. Globale und lokale Variablen dienen dazu, Daten, wie Strings, Zahlen oder auch Vektoren, Kurven oder Tabellen, an bestimmen Stellen der Programmstruktur (Daten, Wissen, Prozesse) abzuholen und an anderen Stellen zu verwenden bzw. abzuspeichern (z.T. gebunden an Objekte) und später zu verwenden.

Diese spezielle Struktur der Cognition-Language ist gewählt worden, um einen evolutionären Wahrnehmungs- bzw. Deutungsprozess zu modellieren. Die Input-Daten, der Programmablauf und das Wissen passen sich schrittweise aneinander an. Am Ende geht es
1. in einem automatischen Lernprozess um die Struktur des Wissens und des Programmablaufs, die auf neuen Datensätzen wieder verwendet werden können, und
2. in einem Deutungsprozess um die letztlich generierte "Datenobjekte von Interesse" (durch Vernetzung der Originaldatenobjekte erzeugte hierarchisch höhere Objekte).

### Lösungswege:

Technisch werden die genannten Lösungen ermöglicht durch
a.) automatische Segmentierung der Daten in hierarchische Netzwerke, die mit Wissens-Objekten und anderen Objekten automatisch zu einem ganzheitlichen Programmnetz (PN) verknüpft werden, wobei sich die gesamte Vernetzung während des Programmablaufs dynamisch verändert,
b.) ein Navigationsverfahren im multimodalen Netz (der En) zum Auffinden von Teilnetzen (= Untermengen der Programmeinheiten), mit der Möglichkeit auf diesen Teilnetzen Klassifikations- und Segmentierungsprozesse lokal ablaufen zu lassen und
c.) Inter- und Intranetzkommunikation durch Variablen mit den entsprechenden Prozessen.

### A. Heterogene Verknüpfungen und heterogene Domänen (für alle Lösungen).

Automatisches Erstellen von Verknüpfungen zwischen Objekten, die dazu dienen, hierarchische übergeordnete Objekte zu generieren, diese als Ganzes mit Merkmalen versehen und klassifizieren zu können und wiederum auf noch höherer Ebene mit anderen Objekten verknüpfen zu können, usw.. Zudem dienen sie allgemein dem schnellen Auffinden von Objekten, indem man leichter auffindbare Objekte als Startobjekte benutzt und dann über etablierte Verknüpfungen die schwerer auffindbaren Objekte wesentlich schneller erreicht als durch anderes prozesshaftes Vorgehen (Indizierung). Die Verknüpfungen sollen jedoch nicht fest vorgegeben sein, sondern vielmehr davon abhängen, welche konkreten Strukturen in den jeweiligen Daten vorliegen. Somit ist das Ziel das automatische prozess- und wissensgetriebene Erstellen und Vernichten von Verknüpfungen zwischen automatisch generierten Untermengen der (heterogenen multimodalen) Daten. Dies ist nur möglich mit Hilfe eines multi-modalfähigen Netznavigationsverfahrens.

Die automatisch neu zu erstellenden Verknüpfungen werden durch Navigation im CN, also entlang verschiedener Objekte und Verknüpfungen, definiert. Gleichzeitig ermöglichen diese neuen Verknüpfungen und auch das Erzeugen neuer Objekte, wieder neue Navigationspfade. Auf diese Weise wächst das CN, wobei es teilweise aber auch wieder abgebaut wird (klingt nach der Entwicklung des Gehirns). Dabei dienen sowohl die Existenz oder Nicht-Existenz der Knoten und Verknüpfungen als auch die Existenz oder Nicht-Existenz von Seitenzweigen des Pfads als Bedingung ob der Pfad fortgeführt oder abgebrochen wird. Teil des Navigationspfads können auch mathematisch bzw. logisch miteinander verknüpfte Bedingungen, Knoten und Kanten des Netzes sein (mit anderen Worten manche der Verknüpfungen sind mathematische Operationen wie und, oder +, - * usw.). Am Ende oder auch bereits an Zwischenschritten dieser Navigation können Segmentierungsprozesse stehen, die auf die an dieser Stelle und auf die dort vorgefundenen Untermengen ausgeübt werden. Wird der Pfad wegen Nichterfüllung der Bedingungen abgebrochen, ist die Untermenge für alle nachfolgenden Prozesse gleich der Nullmenge. Wird der Pfad bis zur Stelle des Prozesses geführt, gilt die an dieser Stelle des Pfads gefundene Untermenge für den angehängten Segmentierungsprozess als die "Untermenge von Interesse", als die sogenannte Domäne, und der Prozess wird auf dieser Untermenge ausgeführt. Segmentierungsprozesse erzeugen und/oder vernichten Objekte, Gruppen von Objekten (Domänen) und Verknüpfungen. Zu diesen Objekten und Verknüpfungen gehören die Segmentierungsprozesse selbst, lokale oder globale Variablen oder deren Werte, Klassen und Markierungen (Labels), aus den Daten durch Zusammenfassung von deren Elementen generierte Objekte und alle Arten von Verknüpfungen. Zu den Verknüpfungen aller Art gehören also sowohl die vordefinierten, automatisch während des Programmablaufs aufbereiteten Verknüpfungen (wie z.B. für Bildobjekte direkte geometrische Nachbarschaften in Form von Nachbarschaftslisten oder geometrisch hierarchische Verknüpfungen) als auch die in Segmentierungsprozessen beschriebenen und prozesshaft erzeugten Verknüpfungen. Solche prozessgetriebenen Verknüpfungen sind bisher nirgends so beschrieben worden, insbesondere nicht, wenn die Navigation und Verknüpfungen auf heterogenen Objekten und Verknüpfungen durchgeführt werden, wobei auch die internen Objekte wie Prozesse, Attribute, Merkmale und Klassen dazugezählt werden. So können Elementen einer Domäne mit den Elementen einer anderen oder sogar andersartigen Domänen auf einfache automatische Weise verknüpft werden. Ein spezieller Segmentierungsprozess kann dabei heißen: "verknüpfe die En der Startmenge des Pfads mit den En der Endmenge. Bisher können nur Verknüpfungen von Bildobjekten mit Klassen der Klassenhierarchie automatisch erstellt werden. Nur innerhalb der Bildobjekthierarchie kann auf die beschriebene Weise navigiert werden, nicht jedoch innerhalb der Prozess-, Variablen-, Merkmals-, Expressions- und Klassenhierarchie. Variablen sind zudem nicht hierarchisch strukturierbar und Merkmale nur bedingt und Expressionen existieren nur für Erstellung von benutzerdefinierten Merkmalen und für die Verknüpfung von Merkmalen zu Klassen.

Es können auch mittels Prozessen keine Verknüpfungen zwischen Bildobjekten erstellt werden und somit schon gar nicht zwischen Objekten verschiedener Bilder oder gar heterogene Verknüpfungen zwischen einerseits Objekten in Bildern und andererseits andersartigen Datenobjekten wie z.B. Tabelleneinträgen oder internen Objekten wie Prozessen oder Inhalten in Klassen (Expressionen und Bedingungen).

Auf die beschriebene Weise der heterogenen Navigation und Verknüpfungs- und Domänenerzeugung können die an ganz unterschiedlichen Orten gelegenen Tabelleneinträge, Bildobjekte und Textobjekte untereinander und sogar datenübergreifend auf abstrakte Weise automatisch miteinander verknüpft werden.

Die so neu definierten Verknüpfungen können danach wiederum zur Navigation durch das allgemeine Objektnetz und so zur Definition und Erzeugung wieder neuer Domänen und Verknüpfungen dienen. Gruppen von verknüpften Objekten können wieder als Objekte mit Merkmalen definiert werden, die auf höherer hierarchischer Ebene wiederum verknüpft werden können. Auf diese Weise können z.B. Objekte in zweidimensionalen Schichtbildern zu dreidimensionalen Objekten mit Merkmalen wie Volumen durch Verknüpfung von Objekten in unterschiedlichen Schichtbildern zusammengesetzt werden. Auch innerhalb eines Bilds können so automatisch nicht-benachbarte Objekte, die in einem Sinnzusammenhang stehen, zu einem Objekt (z.B. gepunktete Linie) mit einem Merkmal, wie Länge, versehen werden. Solche übergeordneten Objekte können dann auch mit lokalen Variablen oder mit Klassen verknüpft werden. Das gleiche gilt für Texte und Tabellen und andere Daten. Auch nicht benachbarte Tabelleneinträge können in einem Sinnzusammenhang stehen und übergeordnete Objekte mit Merkmalen bilden, oder ein Tabelleneintrag kann erst durch Beziehungen zu anderen Einträgen eine besondere Bedeutung erlangen.

Zusammenfassend kann man sagen, dass die automatische Erzeugung von Verknüpfungen durch Navigation im CN neu ist und vor allem neu bezüglich Navigation im heterogenen multimodalen CN.

### B. Kommunikation im CN während des Programmablaufes (für alle Lösungen).

Die Vernetzung und die programminterne Kommunikation geschieht auf zwei Arten: 1. über Links bzw. Verknüpfungen und 2. durch Variablen.

Expressionen sind kleine mathematische Teilnetze die mit einem Namen versehen werden können und somit an beliebigen Stellen des CPs durch Verlinkung (unter Verwendung ihres Namens) verwendet werden können.

Neu ist nun, alle Mechanismen im System wie benutzerdefinierte Schwellwerte, Klassenbeschreibungen, Merkmale, Algorithmen, Prozesse, Bedingungen, Domänen, Teile des Programmablaufs usw. mit allen möglichen mathematischen und logischen Operationen wie +,-,*,/,log, exp, sin,...und, oder, nicht-und, nicht-oder vernetzen zu können (in einer Art Formeleditor) und dies als Expression mit einem Namen zu versehen und an beliebiger Stelle des CPs verwenden zu können. Bei dieser Vorgehensweise ist vor allem das Verwenden von mit Namen versehenen Teil-Programmabläufen, "Customized Algorithms", CAs, erwähnenswert. Bisher fanden Verweise (Links) auf Klassen innerhalb eines Programmablaufs Verwendung. Nun können auch CAs innerhalb einer Klassendefinition benutzt werden. Das ermöglicht, ein Sub-Programm in CL zu schreiben zur Berechnung eines komplexen Merkmals, das über die Möglichkeiten ein CF mittels mathematischer Vernetzung zu erstellen hinausgeht. Es stellt somit eine Art "höheres CF" dar, ein CF, das nicht in C++, sondern in CL programmiert wurde. Ein weiterer Vorteil der Expressionen ist die Möglichkeit, Programmablauf und Wissen klarer voneinander zu trennen und gleichzeitig die Kommunikation zwischen beiden zu verbessern. Expressionen können unabhängig formuliert werden und an verschiedenen Stellen Verwendung finden. Dabei kann es Sinn machen, eine Klassenbeschreibung in mehrere Expressionen aufzuspalten (z.B. in der Bildanalyse in eine Expression mit Formbeschreibungen des Objekts und eine weitere mit Farbbeschreibungen). Es ist durchaus wahrscheinlich, dass im Programmablauf an verschiedenen Stellen nur Teilaspekte einer Klassenbeschreibung sinnvoller Weise benötigt werden.

Die bessere Trennung von Programmablauf und Wissen ist vor allem dann von besonderer Bedeutung, wenn ein Programm auf eine neue Ausprägung von Input-Daten angepasst werden soll. Einerseits möchte dann ein professioneller CL-Programmierer möglichst wenig am Programmablauf ändern müssen (wünschenswerter Weise nichts) und hauptsächlich oder nur die Expressionen in den Klassen der neuen Situation anpassen. Andererseits wäre dann ein Nicht-CL-Programmierer, also ein Anwender einer CL-Lösung , in der Lage ohne den Programmablauf verstehen zu müssen, das Programm allein durch Optimieren der Expressionen auf seine Daten anzupassen. Das Ändern der Expressionen ist auf dramatische Weise einfacher als das Ändern eines Programmablaufs. Da nun die Expressionen auch im Programmablauf Verwendung finden, ändert ein Anwender damit indirekt ebenso den Programmablauf. Dies geschieht dann aber auf sinnvolle Weise ohne dass der Anwender es überhaupt merken muss.
1) Arithm/logic Expressions: Generelle Ausdrücke, formuliert als "Formeln," umfassen ClassDescriptions, Cust Arth Features, tresholds etc.
   erlauben die Definition von Regeln, deren logische Verknüpfung sowie alle mathematischen Operationen wie +,-,*,/,log, exp, sin,...
2) Procedural Expressions: Generelle Ausdrücke, formuliert in Prozess Sprache, erlauben CustAlg, CustRelationalFeatures, ...
3) Arithm. Expressions können eingesetzt werden als
   Feature: Def: berechnet eine Eigenschaft eines Objekts (BildO, Link, Klasse, Prozess,...) (returns double)
   Fuzzy Conditions: wie gehabt (thresholds sind einfache spezielle Fälle einer Fuzzy Condition)
4) Proc. Expressions können eingesetzt werden als
   Algorithmus: Def.: verändert Netzstruktur durch erzeugen/verändern/löschen von Objekten/Links/Attributen
   Feature: Def: berechnet eine Eigenschaft eines Objekts (BildO ,Link , Klasse, Prozess,...) (returns double)
   Domain: Def: beschreibt eine Menge von Objekten auf Basis der Netzstruktur unter Berücksichtigung des aktuellen Prozessierungszustands.
   Fuzzy Conditions: wie gehabt (thresholds sind einfache spezielle Fälle einer Fuzzy Condition)
   Process: wie gehabt
5) Expressions haben eindeutige Namen.
6) Domain: Net-Struktur (global/local) + Fuzzy Condition (Expression)
   global: all objects, all classes, image object level, etc...
   local: current object, neighbors, super/sub object(s), ...
   Fuzzy Condition: additional expression
7) Class:
   * can store an arbitrary number of named expressions
      * predefined names:
      * classify = aktuelle class description
         * sgmn = std. segmentierverfahren für diese Objekte
         * general = std. generalisierverfahren für diese Objekte
         *...
8) Class Centric Development:
   ex: **for all** objects on img obj level main **with** membership to nuclei.classify > 0.2 : assign nuclei
      * Class expressions können über "c!ass_name"."expression_name" adressiert werden.
      * Class expressions können "Platzhalter-Expressions" initialisieren.
   ex2: **for all** objects on img obj level main **with** assigned to nuclei: apply nuclei.generalize

### Variablen und entsprechende Prozesse

Die zweite Art der programminternen Kommunikation geschieht mittels Variablen. Sie können als Container verstanden werden, die Informationen bei Programm-Objekten und -Verknüpfungen (also bei CN-En) abholen können und bei anderen Programmobjekten und -verknüpfungen zur Verfügung stellen oder abspeichern. Im Fall des Abspeicherns handelt es sich um lokale Variablen, oder Objektvariablen, und im anderen Fall des Transports und des "zur Verfügungstellens" um globale Variablen, oder Szenenvariablen.

In erster Linie haben vor allem die globale Variablen die Aufgabe der programminternen Kommunikation während lokale Variablen hauptsächlich einmal ermittelte Ergebnisse verknüpft mit CN En abspeichern und sie für spätere Kommunikationen bereitstellen. Das Abspeichern von Ergebnissen in oder an Objekte oder Verknüpfungen kann mehrere Gründe haben. Zum einen kann der Rechenaufwand zum Berechnen eines Ergebnisse sehr groß sein und das Ergebnis an mehreren Stellen des Programmablaufs benötigt werden. Speichert man die Werte lokal ab, muss die Berechnung nur einmal geschehen und die Werte können immer wieder abgerufen werden. Zum anderen kann es sein, dass eine Neuberechnung des Ergebnisses zu einem späteren Zeitpunkt des Programmablaufs gar nicht mehr möglich ist. Da das gesamte Programmobjektnetz dynamisch ist, Beziehungen und Objekte (also das gesamte CN) sich ständig ändern, werden sich auch die Ergebnisse von Berechnungen ändern. Alte Ergebnisse können aber von Bedeutung sein, wenn z.B. die Entwicklungsgeschichte eines Objekts als Grundlage einer Segmentierungsentscheidung dient.

Globale Variablen haben nur einen Sinn, wenn sie Hand in Hand mit entsprechenden Segmentierprozessen gehen, also deren Inhalte bzw. Werte auch tatsächlich abgeholt, verwendet oder abgelegt werden können. Sie müssen also in der Lage sein alle im Programmnetzwerk relevanten Daten aufnehmen zu können. Dementsprechend müssen diese Aktionen auch als Segmentierprozesse formulierbar sein. Zum Beispiel muss der Zugriff auf die Klassenhierarchie möglich sein, um dortige Veränderungen automatisch in den Programmablauf einfließen lassen zu können. In der Textanalyse muss es also möglich sein, den Namen der Klassen (bzw. die Konzepte in der Ontologie), als String in eine Variable schreiben zu können und diesen String mit den Textinhalten, bzw. Worten, der Textinputdaten vergleichen zu können. Das beinhaltet bereits zwei Arten von Prozessen: "schreibe Klassenname als String in Variable" und "vergleiche in Form einer Bedingung" (z.B. = oder Fuzzy-Vergleich) den Inhalt der Variablen mit Textobjekten. Diese Aktion scheint auf den ersten Blick sinnlos zu sein, da man im Programmablauf ja direkt den Klassennamen verwenden könnte, ohne die Klassenhierarchie (Ontologie ist hier immer eingeschlossen) bemühen zu müssen. Dies setzt aber voraus, dass der CL-Programmierer alle Einträge der Klassenhierarchie kennt, auch die zukünftigen, was wir aber ausdrücklich vermeiden wollen. Wie bereits weiter oben erwähnt, kann sich die Klassenhierarchie ändern und man möchte dann nicht nach allen entsprechenden Stellen im Programmablauf suchen müssen, um dort ebenfalls dann alle entsprechenden Einträge ändern zu müssen. Das sollte automatisch geschehen und ist über die Navigation und die Domänen auf die folgende Art zu realisieren (am Textbeispiel erklärt).

Genauso wie man nur bestimmte Objekte in den Inputdaten selektiv über die Domänen behandeln kann, ohne genau zu wissen, welche ganz konkret bei einer konkreten Analyse vorkommen oder erst durch Segmentierprozesse gebildet werden, so kann man auch unbekannte Klassen, Prozesse, Domänen, Expressionen oder Variablen über die beschriebene Navigation auffinden und behandeln. Bei Inputobjekten verwendet man häufig die Navigation über Klassen und Expressionen: Alle Inputobjekte, die mit einer bestimmten Klasse verknüpft sind und bestimmte Bedingungen erfüllen repräsentieren die Domäne und werden behandelt. Hier geht also die Navigation von den Klassen über die Klassifikationsverknüpfungen zu den Input-Objekten. Entsprechend kann man auch für Klassen vorgehen, wenn man von abstrakteren Klassen zu konkreteren navigiert.

Wenn z.B. an einer Stelle eines Programmablaufs zur Textanalyse, im Zusammenhang mit Proteinen in zellbiologischer Hinsicht, Proteinnamen automatisch interpretieren möchte, dann muss man im Programm auch die Abkürzungen der Proteine behandeln können. Diese Abkürzungen bestehen in der Regel nur aus drei Buchstaben und sind somit in hohem Maß mehrdeutig. Es ist nun möglich, alle Abkürzungen im Inputtext aufzusuchen, ohne sie vorher zu kennen. Sie müssen nur in der Klassenhierarchie mit anderen und letztlich mit abstrakteren Klassen verknüpft sein. Dann kann die Navigation und damit die Definition der Domäne über diese Verknüpfungen vorgenommen werden. Wenn also die im Inputtext vorkommenden Abkürzungen in der Ontologie ebenfalls erwähnt sind und z.B. über hierarchische Verknüpfungen mit der Klasse bzw. dem Konzept "Protein" verbunden sind, dann kann man über die Navigation "zu allen Proteinen", dann über die hierarchische Verknüpfung "ist speziell" und mit der Bedingung "Anzahl Buchstaben < 4" diese Teilmenge der Worte im Text, nämlich die Abkürzungen, als Domäne erreichen. Anschließend kann man über Segmentierungsprozesse die Klassifikationsverknüpfungen zwischen der Klasse "Proteinabkürzungen" und den im Inputtext vorkommenden Proteinabkürzungen erstellen. In einem ersten Schritt sind möglicherweise viele der Verknüpfungen falsch, da auch Abkürzungen anderer Begriffe verknüpft werden. Später können andere Prozesse aber zur Korrektur herangezogen werden.

Die Prozesse zum Erstellen der Klassifikationsverknüpfungen können unterschiedlicher Art sein. Es kann einen fest installierten Prozess "String-Match" geben, bei dem -falls Klassenname mit Name im Text übereinstimmen- die Klassifikationsverknüpfung erstellt wird. Oder eine Variable kann mit den Namen der Konzepte als "Werte" versehen und mit der Bedingung "Wert der Variablen=Wort-String" die Abkürzungen mit einer Markierung versehen. Diese Markierung (mit z.B. dem Namen: Abkürzung von Proteinen), man kann sie auch erzwungene Klassifikation nennen, dient quasi als Index, denn die Abkürzungen können nun sehr schnell über die erstellten Links zu den Markierungen wieder aufgefunden werden. Zudem ist eine einfache Formulierung der Domäne möglich: "gehe zur Klasse "Abkürzungen von Proteinen" in der Klassenhierarchie und anschließend über Klassifikations-oder Markierungsverknüpfungen zu den Input-Objekten". Die speziell für Abkürzungen erstellten Programmabläufe können allesamt auf dieser Domäne ablaufen, die durch diese Quasi-Indizierung sehr schnell gefunden wird.

Variablen müssen dabei keineswegs nur Zahlen oder Strings sein. Vor allem zum Trainieren eines Programms (aber auch beim normalen Programmablauf) ist es angebracht und bequemer, auch Tabellen, Vektoren, Variablensätze, oder sogar Datenblöcke, wie Bilder oder Texte, als Inhalte von Variablen zu ermöglichen und somit auch die programminterne Kommunikation dieser Daten. Ein Variablensatz besitzt einen Namen, wie alle Variablen, und ist eine Menge von Variablen plus deren Werte.

In diesem Sinn kann ein repräsentatives Bild oder eine Schablonenumriss eines in einem Bild zu findenden Objekts eine lokale Variable in der Wissenshierarchie darstellen. Bei Bedarf kann diese Variable durch Navigation abgerufen werden, zu bestimmten Bildobjekten transportiert werden und dort zu einem Segmentierprozess verwendet werden (z.B. Klassifikation durch Bestimmung des skalen- und rotationsinvarianten besten Deckungsgrads). Ähnliches gilt für Tabellen oder Texte oder andere Daten wie DNA-Code. Tabellenbeispiele, Textbeispiele (viele Worte) oder DNA-Codebeispiel können als Vorlage dienen und mit einem konkreten, bereits segmentierten Inputobjekt verglichen werden. Dieser Vergleichs-Segmentierungsprozess ist dann natürlich in der Regel kein simpler Match, sondern einer, der Verzerrungen zulässt.

Beim automatischen oder semi-automatischen Trainieren eines CPs werden dem Programm die gewünschten Endergebnisse in irgend einer Form mitgeteilt. Durch hierarchische Annotation kann ein Nutzer festlegen, welche Art von Objekten gefunden werden soll. Es kann aber auch interaktiv geschehen, indem ein Anwender bestimmte Prozesse (mit variierenden Parametern) auf einen Datensatz anwendet und dabei einige gewünschte Objekte entstehen oder Objekte manuell markiert. Die automatisch gefundenen richtigen Objekte kann der Anwender ebenfalls markieren. Das Programm kann dann automatisch aus diesen markierten Objekten Parameter extrahieren und mit diesen Parametern neue Prozesse durchführen, die wieder zu Objekten führen, die erneut markiert werden können, usw. Letztlich steht am Ende dieser Aktion ein Parametersatz zur Verfügung, der das optimierte Ablaufprogramm repräsentiert, dadurch bestimmt, dass eine optimale Übereinstimmung (beste Gesamt-Klassifikation aller Objekte) mit den markierten Objekten besteht. In diesen Parametern können Segmentier- und Ablaufparameter (auch Klassifikation) für alle En stehen. Damit kann also auch festgelegt werden, welche Expressionen, Klassen oder Prozessblöcke aktiv sein sollen und in welcher Reihenfolge. Es ist an dieser Stelle als selbstverständlich vorausgesetzt, dass im CN Merkmale für alle En zur Verfügung stehen. So müssen für ein selbst-lernendes CP auch Segmentierprozesse oder Blöcke daraus über Merkmale wie Prozesslaufzeit klassifizierbar sein.

Da nun üblicherweise nicht nur eine Art (eine Klasse) von Objekten aufgefunden werden soll, sondern eine ganze Vielfalt davon, müssen auch viele solcher Parametersätze und damit möglicherweise eine sehr große Anzahl von Parameter eintrainiert werden. Wenn also die Anzahl der Parameter unübersichtlich groß wird, macht es Sinn, Variablen mit ihren Werten hierarchisch zu strukturieren in Form von Gruppen mit eigenem Namen. Parametersätze sind aber noch mehr als hierarchisch strukturierte Variablen, denn unterschiedliche Parametersätze können die gleichen Variablen jedoch mit unterschiedliche Werten beinhalten. Ein Parametersatz ist also eine Art n-dimensionaler Vektor mit einer Anzahl von n Werten und mit frei wählbaren Dimensionen (dargestellt durch die Namen der Variablen). Wird ein Parametersatz aktiviert, werden die Werte des Satzes automatisch in die dazugehörigen Variablen geschrieben. Das bedeutet, dass an unterschiedliche Stellen des Programmablaufs unterschiedliche Parametersätze wirksam sein können, und damit möglicherweise die gleichen Variablen aber mit unterschiedlichen Werten.

### C. Automatische wissensgetriebene Segmentierung von Tabelleninhalten zum Zweck deren automatischer Deutung.

Auch im Fall der Tabellenkalkulation generieren die CNT-Softwarelösungen automatisch nicht-vordefienierte aber dennoch sinnvolle Objekte und Beziehungen , Sinnobjekte, aus bzw. zwischen Untermengen der Daten. Welche Objekte und Verknüpfungen automatisch erstellt werden, kann in einer Wissensstruktur, der Klassenhierarchie, beschrieben werden. Sinnobjekte können auch Objekte sein (bzw. sind dieses in der Regel), die nur die Funktion haben, als Zwischenobjekte zu dienen, um letztlich die Segmentierung der eigentlichen Sinnobjekte zu ermöglichen. Die Art der automatisch zu segmentierenden Objekte kann also auf abstrakte Weise in Form einer hierarchischen Wissensnetzes separat vom übrigen Programmablauf formuliert werden. Damit unterscheidet sich die Tabellenkalkulation nach der CNT-Technologie auf dramatische Weise von konventionellen Tabellenkalkulationen.

Automatisch und prozessautomatisch generierte Verknüpfungen dienen der Klassifikation und dem schnellen Auffinden von zu behandelten Sinnobjekten. Sinnobjekt können ein nicht-vordefiniertes Segment einer Zeile oder Spalte sein oder ein nur sehr abstrakt wissensbasiert beschriebenes und prozesshaft definiertes Objekt, das aus hierarchisch verknüpften Zeilen oder Spalten oder Segmenten davon besteht. In einem multimodalen Ansatz besteht ein solches Objekt aus multimodalen Teilen also z.B. aus Bild-, Text-und Tabellensegmenten.

Die gesamte in bereits existierenden beschriebenen CN-Struktur wird dazu benötigt. Zusätzlich sind jedoch noch spezielle, tabellenspezifische Strukturen notwendig. Zu diesen speziellen Strukturen zählen optional Transformationen von Tabellen in Bilder mit thematischen Ebenen, um Tabellen im gleichen CN behandeln zu können wie Bilder. Dies vereinfacht die Datenintegration und die Bedienbarkeit, da die meisten Funktionen nur einmal für beide Anwendungen benötigt werden.

Weitere spezielle Strukturen sind die folgenden:
Zum benutzerfreundlichen Bearbeiten der Tabellen sollte es möglich sein, Sinnobjekte innerhalb von Tabellen (bzw. von aus Tabellen generierten Bildern plus thematischen Ebenen) in neue Tabellen zu transferieren. Das erfordert die folgenden Segmentierprozesse: "Erzeuge leere Tabelle mit Zeilenlänge x und Spaltenlänge y", "definiere Sinnobjekt Y (Tabellenuntermenge) als Sinntabelle Z ", "schreibe Sinntabelle in lokale Variable LV" und "fülle leere Tabelle mit Inhalt von LA" oder "schreibe Inhalt von LA in leere Tabelle an Positionen x,y". Dies bedeutet, Variablen müssen neben Zahlen und Buchstabenketten (Strings) auch Tabellen beinhalten können. Es wäre allerdings auch (etwas umständlicher) möglich über die oben beschriebene Domänennavigation Eintrag für Eintrag des Sinnobjektes an die gewünschte Stelle der leeren Tabelle zu transferieren. In diesem Fall kommt man mit String- und Zahleninhalten von Variablen aus.
So wie in der Bildanalyse konventionelle Prozesse, wie Mittelungs- oder Kantenfilter, auch in die CNT Einzug gehalten haben, so ist dies auch für die Tabellenkalkulation notwendig. Multiplikationen oder allgemein mathematische Operationen einer Zeile oder Spalte mit einer anderen oder auch das Umsortieren von Zeilen und Spalten. werden als Segmentierprozesse angeboten.
Tabellen sollten über Domänen und Navigation hierarchisch strukturierbar sein. Es muss zum Navigieren folgende Arten von Formulierungen möglich sein: "gehe zur Spalte mit dem Namen XYZ und mit der Merkmalsexpressionen Spaltenlänge=10 und Spaltendurchschnittswert<100, von dort zu der linken Nachbarspalte, von dort entlang der hierarchischen Verknüpfung "ist Teil von" zum Überobjekt von dort entlang aller Verknüpfungen "hat Teile" zu allen Unterobjekten. Diese am Ende der Navigation stehende Untermenge der Tabelle repräsentiert die Domäne auf der ein Segmentierungsprozess wie "finde den Tabelleneintrag in der Domäne mit dem maximalem Wert" ablaufen kann.
Die Klassifikation von Sinnobjekten muss möglich sein, indem Klassen von Sinnobjekten mit Expressionen als Inhalten (oder Klassen verknüpft mit Expressionen) formuliert werden können. Es muss möglich sein, folgende Arten von Expressionen zu formulieren: "Sinnobjekt ABC hat als Unterobjekte die als KLM und die als NOP klassifizierten Objekte mit dem Mermal D der KLM-Objekte <5 und dem Merkmal E der NOP-Objekte >100". Auch Fuzzy-Merkmale können formuliert werden.

### D. Automatischen Segmentieren, Analysieren und Deuten von komplexen drei- und mehrdimensionalen Bildern durch Verknüpfung von zweidimensionalen Objekten.

Zusätzlich zu üblichen dreidimensionalen Segmentierverfahren beinhaltet die CNT für mehrdimensionale Bilder die Möglichkeit ein vierdimensinales Bild (ein zeitlich veränderliches dreidimensionales Bild) schichtweise zu segmentieren und zu klassifizieren und anschließend durch Verknüpfung der zweidimensionalen Objekte drei- oder vierdimensionale Objekte zu erzeugen. Dieser Vorgang muss als ein evolutionärer angesehen werden, bei dem zwei- und drei/vierdimensionale Analysen sich in einem in einem Wechselspiel einander ablösen.

Die Schichtstrukturen können dabei als ein Bild mit unterschiedlichen Kacheln dargestellt werden oder als eine Anzahl von Bildern, die nach ihrer geometrischen vierdimensionalen Lage sortiert oder markiert sind.

Es müssen Merkmale zur Verfügung stehen, bei denen automatisch verknüpfte zweidimensionale Objekte als drei- oder vierdimensionale Objekte betrachtet werden. Beispiele solcher Merkmale sind Volumen oder Geschwindigkeit eines Objekts.

Das intelligente Segmentieren von mehrdimensionalen Bildern macht das Visualisieren der Bildinhalte in mehrdimensionalen Bildern auf sinnvolle Weise überhaupt erst möglich. Die unterschiedlichen Objekte von Interesse können durch unterschiedliche Farben drei/vierdimensional dargestellt werden und die weniger interessanten Objekte zu einem gewünschten Maß transparent dargestellt werden.

### E. Automatische Datenintegration durch verknüpfte simultane Analyse und Deutung. unterschiedlicher bzw. heterogener Tabellen und anderer Arten von Daten wie Texte, Zahlen, Vektoren, Spektren, Bilder und Präsentationsdokumente und sogar CL-interne Strukturen wie Konzepte und Programmabläufe.

### F. Visualisierung der Resultate als Schaubilder.

### G. Neue Computersprache zum Erstellen selbst-lernender Programme.

Wie bereits weiter oben erwähnt ist, bedarf es nur der Annotation der Input-Daten und der Möglichkeit, Trainingergebnisse (Lernergebnisse) in Form von Tabellen oder Parametersätzen abspeichern zu können. Ansonsten braucht es keine besonderen Ausprägungen der CNT für diese Anwendung, die über die multi-modale Anwendung hinausginge. Eine Ausnahme bildet nur der Fall von extrem komplexen Parametersätzen:

Falls die Anzahl der auszuprobierenden Parameter sehr groß wird, ist das Durchlaufen aller Kombinationsmöglichkeiten in vernünftiger Zeit nicht mehr möglich. Dann müssen evolutionäre und genetische Algorithmen in der CNT eingesetzt werden können

Neu sind folgende Eigenschaften der Programmiersprache (stichwortartig):
1.Erweiterung der Sprache auf globale Variablen, die mit Hilfe von entsprechenden Prozessen Informationen unterschiedlicher Art (Strings, Vektoren, Tabellen,..) zwischen (und innerhalb) Weltwissen, Programmablauf und Inputdaten(kurz: allen En) transportieren können.
2. Segmentierung und Klassifikation von Prozessen und Wissensobjekten.
3. Prozessgetriebene Erstellung von Verknüpfungen für alle Programmobjekte (alle En).
4. Behandlung der vernetzten Objekte als hierarchisch übergeordnete Objekte, die Eigenschaften besitzen können und die wiederum zu hierarchisch höheren Objekten vernetzt werden können, u.s.w.
5. Erweiterung des Domänenbegriffes auf Untermengen des Weltwissens und anderen En des Programmablaufs unter Einbeziehung von CPerstellten Verknüpfungen.
6. Anwendung der Sprache auf heterogene Tabellen aller Art (darunter u.a. auf Business-Intelligence) mit entsprechend themenspezifisch angepassten Prozessen und Objekteigenschaftsberechnungen.
7. n-dimensionale Bild- und Tabellenverarbeitung durch die Möglichkeit mehrere Bilder oder Tabellen zu laden (oder auch nur Bilder mit dem Prozess: lade Tabelle als Bild) und diese und ihre Objekte prozedural zu verlinken.
8. Multimodale Daten laden und verarbeiten zu können durch multi-modale Navigation und Domänen, also aus multimodalen Daten durch multimodale Navigation sehr heterogene Untermengen ausschneiden zu können. Segmentierprozesse können multimodale Domänen zu En erheben und diese mit multimodalen Expressionen und Merkmalen weiter segmentiert und klassifiziert werden.

### Die Erfindung im Einzelnen

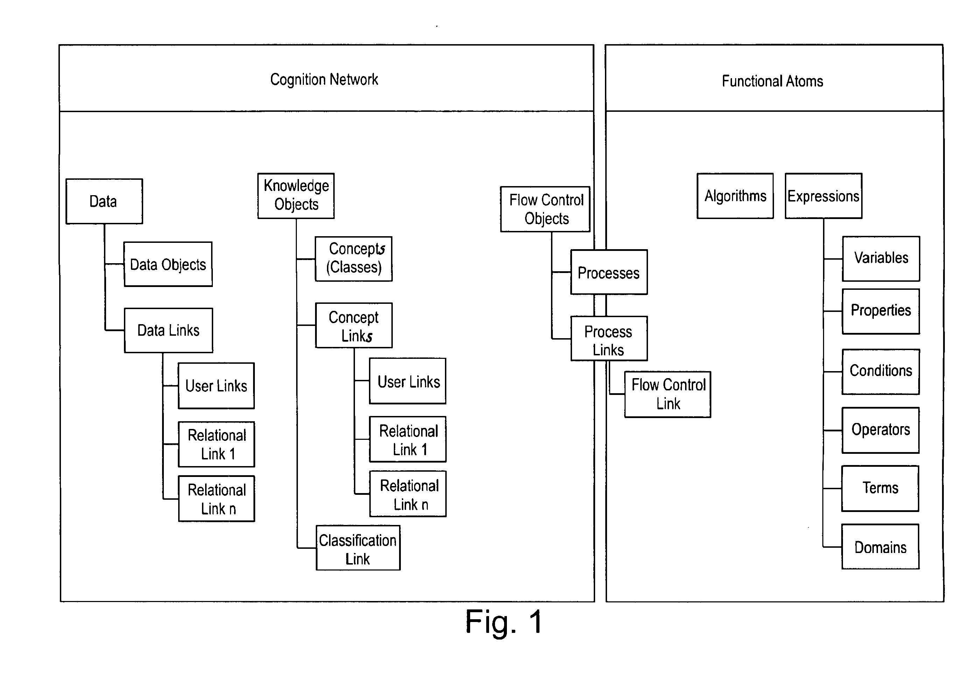

Fig. 1 zeigt graphisch die Objektklassen der Einheiten, En.

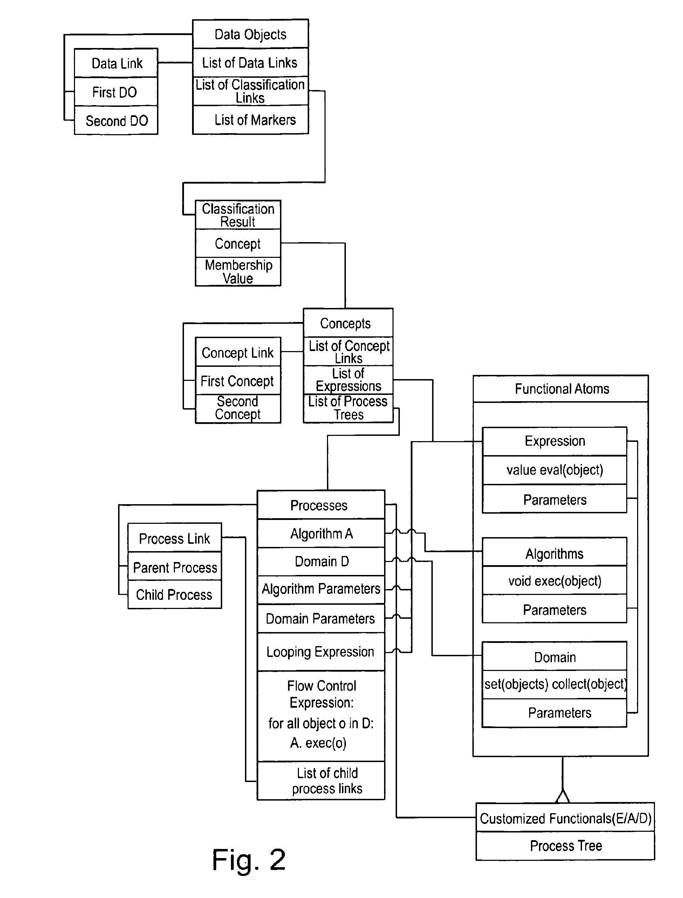

Fig. 2 zeigt das zugehörige Strukturdiagramm.

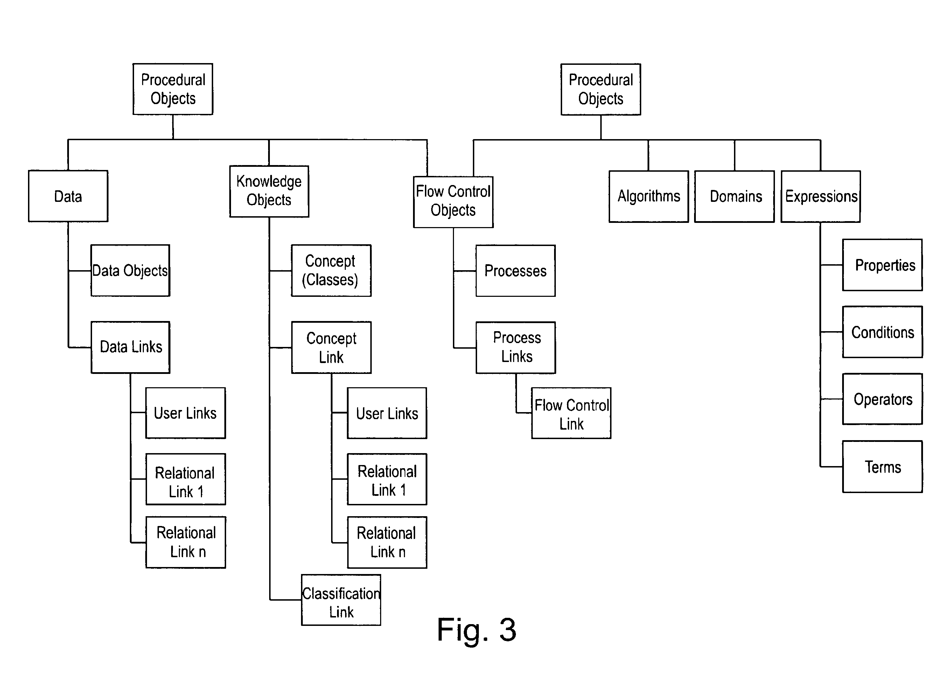

Fig. 3 zeigt auf eine andere Weise die Objektklassen in der CL:

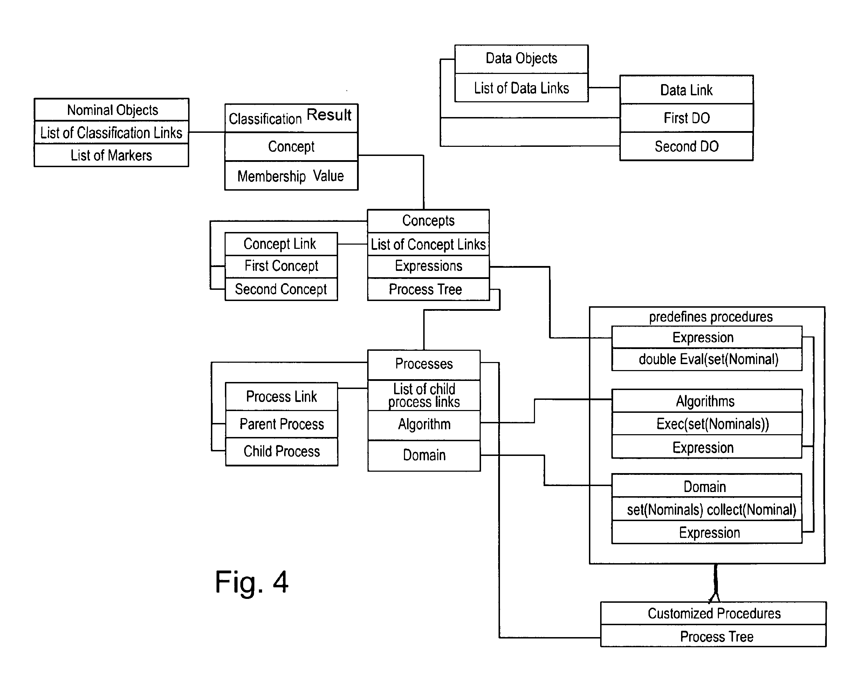

Fig. 4 zeigt das zu Fig. 3 zugehörige Strukturdiagramm:

### Konsequenzen

Cognition-Language ermöglicht das Erstellen von Software-Lösungen zur Deutung von komplexen Datensätzen. Sie ist speziell für Problemstellungen mit nicht-eindeutigen Lösungen konstruiert. Beispiel einer eindeutigen Lösung ist die Summe einer Spalte in einer Tabelle oder das Auffinden der größten Zahlenwerte in der Tabelle (können ein oder mehrer Einträge sein). Alle Rechenmaschinen dieser Welt, sofern sie nicht defekt sind, werden für die gleiche Tabelle zu dem gleichen Ergebnis gelangen. In Fällen jedoch, in denen die Anzahl der notwendigen Rechenoperationen für ein eindeutiges Resultat unbehandelbar groß werden, müssen neue Lösungswege beschritten werden. Die Fragestellung "welcher Zug in einer gegebenen Situation eines Schachspiels ist der optimale?" wird von unterschiedlichen Rechnern unterschiedlich beantwortet. Die Antwort hängt davon ab, wie viele Züge der Rechner in annehmbarer Zeit vorausberechnen kann (alle Züge kann kein Rechner ausrechnen) und mit welchen Strategien er ausgestattet ist. Oft kann dabei nicht einmal bewiesen werden, welche Strategie eindeutig die bessere ist. Eine noch dramatisch verschärfte Situation findet man in Wahrnehmungsproblemen vor. Der Inhalt einer komplexen Tabelle wird wahrscheinlich von 100 verschiedenen Personen auf 100 verschiedene Arten gedeutet und kann von heutigen Computerprogrammen nur sehr primitiv oder überhaupt nicht gedeutet werden.

Ein anderes Beispiel von Nicht-Berechenbarkeit: Die Anzahl der Kombinationsmöglichkeiten von Pixeln eines Bilds zu einem Objekt ist so riesig, dass kein Rechner nur annähernd alle möglichen Objekte erstellen und auf ihre Eigenschaften untersuchen kann. Somit kann kein Rechner das "beste" Objekt eines Bilds eindeutig finden (außer in trivialen Fällen). Die Unberechenbarkeit trifft vor allem dann zu, wenn die Bedeutung von Zahlenblöcken (oder Bildobjekten) erst durch Beziehungen zu anderen Zahlenblöcken (oder Bildobjekten) definiert werden kann (was in fast allen Fällen auch tatsächlich so gegeben ist). In solchen Fällen, also in den Normalfällen eines Deutungsproblems, explodieren die Kombinationsmöglichkeiten ins Unermessliche. Hierin, in der Komplexität der Aufgabe, besteht der Unterschied zwischen einer Tabellenkalkulation und einer Tabellendeutung.

Die Natur hat für solche unberechenbaren Situationen eine Strategie entwickelt: Evolution in kleinen Schritten über primitive Lebensformen zu komplexeren. Mit der Cognition-Language wird eine Sprache angeboten, die auf natürliche Weise eine Evolution in kleinen Schritten von Bedeutungsblöcken innerhalb von Datenstrukturen erlaubt, von primitiven Bedeutungsblöcken zu ausgefeilteren. Bei diesem Vorgehen sind individuelle Behandlungen der Bedeutungsblöcke notwendig: unterschiedliche Bedeutungen (auch wenn sie noch primitiv sind) erfordern unterschiedliche Behandlungen.

Hierbei kann ein primitiver Bedeutungsblock eine einzige Zahl einer Tabelle sein, wenn sie von den anderen Zahlen drastisch abweicht. Diese Zahl ist aber Bestandteil einer größeren Einheit z.B. einer Spalte. Somit kann die ganze Spalte eine besondere Bedeutung erlangen und damit auch für sie eine spezielle Behandlung notwendig machen. Es kann dann aber auch notwendig sein, dass für andere Spalten, die zu dieser einen eine besondere Beziehung haben, ebenfalls eine besondere (evtl. andere) Behandlung erforderlich wird.

Mit der CL mit den Konzepten, Markierungen und den Domänen wird eine lokale Behandlung ermöglicht und eine schrittweise Entwicklung vom Einfachen zum Ausgefeilten. Die Trennung von Wissen und Prozessen macht die Programme übersichtlicher und vereinfacht Ihre Erstellung und ihre kontinuierliche Verbesserung und die Fehlersuche.

### Tabellen Deutung

Tabellen und digitale Bilder haben eine ähnliche Struktur: Sie bestehen aus einem n-dimensionalen geordneten Feld von Zahlenwerten. In Bildern spielen neben den Pixeln die Bildobjekte die entscheidenden Rollen, in Tabellen sind es neben den Zahlen vor allem die Zeilen und Spalten. Bildobjekte sind in der Regel sehr schwierig zu extrahieren, Zeilen und Spalten auf der anderen Seite sind vorgegeben. Nun sind aber keineswegs Zeilen und Spalten die einzigen interessanten Objekte in Tabellen. Innerhalb einer Spalte oder Zeile können nicht-bezeichnete Unterobjekte enthalten sein. So kann in den monatlichen Umsatzzahlen eines Unternehmens ein Sprung in den Zahlenwerten auftreten. Dies kann durch ein Ereignis ausgelöst worden sein, das in den Tabellen ebenfalls explizit erscheint oder auch nicht (z.B. eine Marketingaktivität). Jedenfalls gibt es eine Zeit vor und eine Zeit nach dem Ereignis, d.h. die Zeile kann in zwei Unterobjekte aufgeteilt werden, eines mit hohem und eines mit geringem Durchschnittswerten. Für eine Deutung der Tabelle kann es durchaus Sinn machen, diese Unterobjekte zu behandeln und in Bezug zu anderen Objekten (zu den Marketingaktivitäten) zu setzen. Ein Einbeziehen der Umsatzzahlen der Vorjahre kann dann ebenfalls Sinn machen. Somit ergibt sich also ein ähnliches mehrskaliges Segmentierungsproblem wie bei der Bildanalyse, in diesem Beispiel allerdings nur in einer Dimension.

In Bildern spielen je nach Dimension des Bilds n-dimensionale Nachbarschaften eine große Rolle. Dies ist für Tabellen von geringerer Bedeutung, obgleich sie auch nicht bedeutungslos sind, vor allem wenn Zeilen und Spalten nach bestimmten Kriterien sortiert werden können (Sortierung verändert die Tabelle und kann in Analogie zur Bildanalyse als spezieller Pixelfilter betrachtet werden). Dann kann es Sinn machen, zweidimensionale Objekte zu segmentieren, z.B. Bereiche, in denen Gewinne, Umsätze, Marketingaktivitäten und andere Bereiche sich gleichzeitig auf hohem Niveau befinden. Zwei- oder mehrdimensionale Tabellenprobleme ähnlich denen der Bilder treten in der Praxis allerdings auch ohne Sortierung auf, wenn innerhalb einer Zeile ein Parameter eines Messwerts in kleinen Schritten zu- oder abnimmt und in den Spalten ein anderer Parameter ebenfalls in einigerma-βen homogenen Schritten ab- oder zunimmt. Dies wird jedoch nicht der Normalfall sein und direkte Nachbarschaft in Tabellen wird in der Regel nur im Eindimensionalen von Bedeutung sein. Dennoch gibt es übergeordnete Objekte, deren Einträge über die gesamte Tabelle verteilt sein kann. Deshalb ist es wichtig, dass Daten-Objekte automatisch miteinander verknüpft werden können, wenn sie nach einer automatischen Klassifikationsanalyse zusammen ein sinnvolles Objekt ergeben.

Dies kann als eine Möglichkeit der mehrdimensionale Segmentierung von Objekten betrachtet werden. In diesem Fall könnte man die Zeitsegmente mit hoher Marketingaktivität mit den Zeitsegmenten hoher Umsätze und den Zeitsegmenten hoher Gewinne velinken. Dieses Netz könnte man in ein hierarchisch höheres Objekt transformieren und im Weltwissen mit der Klasse "Marketingerfolg" verknüpfen (Klassifikation). Diese Klassifikation kann automatisch geschehen, indem die Klasse Marketingerfolg bestimmte Objektbeschreibungen (Expressionen) erfüllt. Expressionen basieren auf Objekteigenschaftsberechnungen (Features) und können einfache Bedingungen (Verhältnis Marketingaufwand zu Gewinnzuwachs beim Sprung kleiner 0.01) oder Fuzzybeschreibungen sein. Eine Klasse kann aus der logischen Verknüpfung von vielen Expressionen sein. Beim Vergleich der Expressionslogik mit den konkreten Objekten ergibt sich eine Klassifikationswahrscheinlichkeit, die im genannten Beispiel die Größe des Erfolgs beschreibt. Somit können über eine Segmentierung und anschließender Klassifikation alle Marketingerfolge (z.B. seit Bestehen der Firma) mit einer Klassifikationswahrscheinlichkeit größer 0.5 gefunden werden. Diese können nun wiederum miteinander verknüpft werden und ein Objekt auf noch höherer Ebene bilden. Die einzelnen Marketingerfolge können miteinander verglichen werden und auch wiederum mit anderen höheren Objekten in Bezug gesetzt werden, um weitere Korrelationen herauszufinden.

Die Vorzüge der Domänen können ebenfalls an diesem Beispiel erklärt werden. Die Objekte "Marketingerfolge" waren in den ursprünglichen Daten nicht vorhanden, sie wurden in Cognition-Language erst erzeugt. Nun kann man sie als Domänen verwenden. Domänen leiten die Prozesse an die richtigen Stellen innerhalb der Daten. In unserem Beispiel wäre die Domänenbeschreibung wie folgt: "gehe zu allen Marketingerfolgen ( Klassenbeschreibung der Domäne) mit Klassifikationswahrscheinlichkeit größer 0.7 (Bedingung für große Erfolge) in der Zeit nach 1.1.2000 (2. Bedingung, Zeitpunkt AG Gründung) und lasse den Prozess aktiv werden". Der Prozess kann die Berechnung einer Zahl sein z.B. die Varianz des Verhältnisses von Marketingaufwand zu Umsatz der Firma. Hier ist vorausgesetzt, dass im Programm Formeln basierend auf Features und Variablen erstellt werden können (Formeleditor). Damit erhält man ein Maß dafür, ob Marketingaufwand und Firmenumsatz linear miteinander verknüpft sind. Im Einzelnen sieht dieser Vorgang in Cognition-Language wie folgt aus.
1. Prozess, Domäne: gehe zu allen Marketingerfolgen (mit den entsprechenden Bedingungen), keine Prozessaktivität; 2. Prozess, (Unterprozess): Domäne: gehe zu dem Unterobjekt Marketingaufwand, Prozessaktivität: schreibe den Wert des Features "Summe Marketingaufwand" in die globale Variable "Marketingaufwand"; 3. Prozess, (Unterprozess): Domäne: gehe zu dem Unterobjekt Umsatz, Prozessaktivität: schreibe den Wert des Features "Summe Umsatz" in die globale Variable "Umsatz": 4. Prozess, Unterprozess: keine Domäne Prozessaktivität: teile die globalen Variablen "Marketingaufwand" und "Umsatz" durcheinander und schreibe es in die globale Variable "Verhältnis"; 5. Prozess: Domäne: gehe zum Überobjekt (Marketingerfolg), Prozessaktivität: schreibe globale Variable "Verhältnis" in lokale Variable "Marketingaufwand/Umsatz"; 6. Prozess (kein Unterprozess): Domäne: gehe zu allen Marketingerfolgen wie gehabt, Prozessaktivität: berechne den statistischen Wert der Standardabweichung der lokalen Variablen "Marketingaufwand/Umsatz" und schreibe das Ergebnis in eine globale oder lokale Variable mit geeignetem Namen.

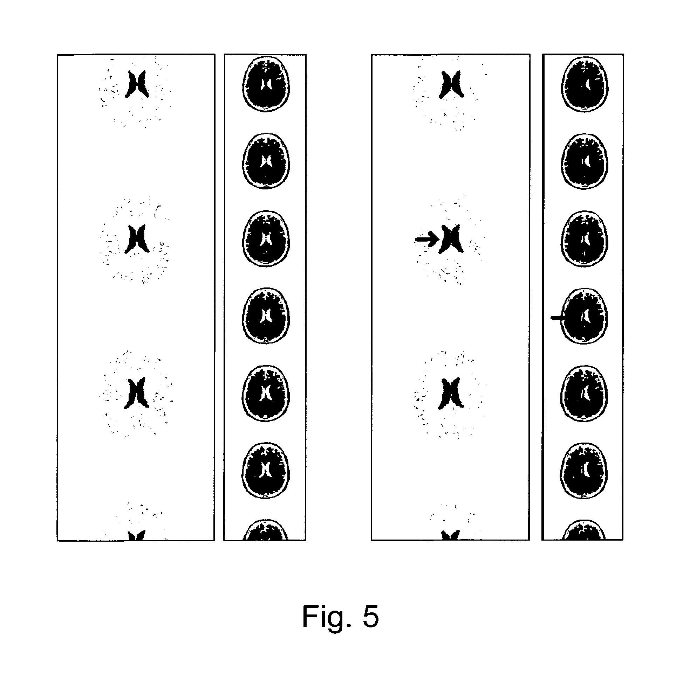

Figur 5 zeigt eine 3D-Analyse eines MR-Bilds.

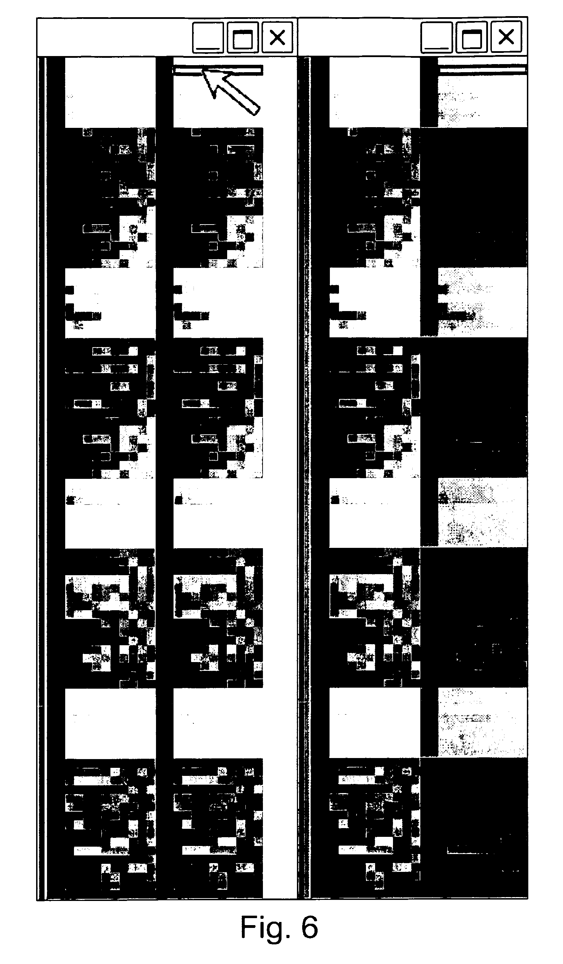

Man sieht links für eine 3D-Analyse eines MR-Bilds eines menschlichen Kopfs einmal einen Streifen in Grautönen von ca. 6 Schnitten und ein Segmentierresultat (2-fach vergrößert im Vergleich zu den Graubildern). Hier sind die linken (grün) und rechten (rot) Ventrikel und die weiße Gehirnmasse durch Segmentation der Schnitte gefunden. Auf der rechten Seite sind die linken Ventrikel-Schnitte miteinander verknüpft und das Gesamtvolumen des linken Ventrikels kann ermittelt werden. Die Verknüpfung kann visualisiert werden, indem man auf einem einzelnen Schnitt das Objekt mit der Computermaus anklickt. Dann könnten (als Beispiel) alle Objekte, die mit diesem verknüpft sind, gleichzeitig automatisch mitmarkiert werden, so wie in den rechten beiden Streifen gezeigt. Man kann damit überprüfen, ob die automatische Verknüpfung wunschgemäss funktioniert hat. Entsprechendes kann man auch für andere Daten wie Texte oder Tabellen implementieren (sie auch Figur 6).

Fig. 6 zeigt ein Beispiel einer Tabellenkalkulation.

Hier wurde bei einer Tabellenkalkulation in CNT ein Zeilensegment angeklickt und die mit diesem Segment verknüpften sind ebenfalls automatisch selektiert (rot markiert). So kann ein hierarchisch übergeordnetes Objekt visualisiert werden. Die Grauwerte stellen die Zahlenwerte dar. Man kann aber auch direkt die Zahlen darstellen lassen. In den rechten beiden Streifen sind geometrisch übergeordnete Objekte farbkodiert dargestellt. Klickt man hier auf z.B. ein braunes Feld, dann ist das gesamte braune Feld markiert. Es steht dann auch als Objekt zur Domänennavigation zur Verfügung.

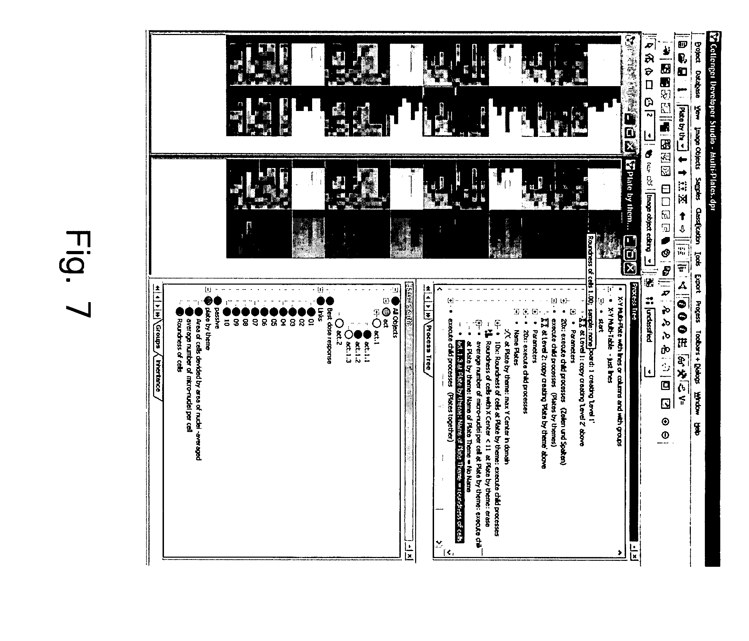

Fig. 7 zeigt ein Beispiel einer Hierarchie.

Man sieht hier die Klassenhierarchie, die Prozesshierarchie und die segmentierten und klassifizierten Input-Daten. Die roten und blauen Streifen sind nicht-vordefinierte automatisch gefundene Sinnobjekte (und deshalb auch alle unterschiedlich lang).

Beispiel einer " Sprachdefinition: http://www.ecma-international.org/publications/files/ECMA-ST/Ecma-262.pdf (188 Seiten!).

Wichtig ist vielleicht auch die Frage nach der Ablaufsteuerung (Runtime-Environment). Hier gibt es noch etliche Alternativen bzw. Ergänzungen.
1. Iteratives Prozessieren von heterogenen Massendaten aus heterogenen Datenquellen zum Extrahieren benutzerspezifischer, relevanter Informationen (Kenngrößen, Diagramme).
2. Das Prozessieren ist charakterisiert durch
2a. die Zuordnung von Daten zu Objekten,
2b. die Erzeugung, Vernichtung und Verknüpfung von Objekten bzw. Objektmengen,
2c. die Beschränkung der Anwendung von Prozessierungsanweisungen auf bestimmte, dynamisch erzeugte Objektmengen (Domänen).
3. Objekte und Prozessierungsanweisungen können grafisch oder textuell dargestellt und vom Benutzer editiert werden.

Ausführungsformen der Erfindung können zusätzlich oder alternativ folgende Aspekte und Ausgestaltungen umfassen:
Gemäß einem Aspekt 1 weist ein computerimplementiertes Verfahren zum automatischen wissensbasierten Erzeugen von anwenderrelevanten Daten, folgende Schritte auf:
   Auswählen von Objekten aus einer Gruppe, die Datenobjekte, Klassenobjekte, Prozessierungsonbjekte und heterogene Verknüpfungsobjekte aufweist, um dadurch eine erste Gruppe von Objekten zu erzeugen,
   Auswählen von heterogenen Verknüpfungsobjekten, welche Objekte innerhalb von gleichartigen oder heterogenen Gruppen miteinander verknüpfen und von der ersten Gruppe von Objekten zu einer oder mehreren zweiten Gruppen von Objekten führen;
   wiederholtes Durchführens des Auswählens der heterogenen Verknüpfungsobjekte bis ein vorbestimmtes Endkriterium erfüllt ist;
   Auswählen von einem oder mehreren Algorithmen zum Verarbeiten derersten und zweiten Gruppen von Objekten; wobei
   alle Schritte mehrfach wiederholt und hierarchisch geschachtelt angewendet werden und dadurch eine Ablaufsteuerung definieren.

Bei diesem Verfahren kann gemäß Aspekt 2 das Auswählen der heterogenen Verknüpfungsobjekte teilweise unterbleiben.

Aspekt 3 betrifft ein Verfahren nach Aspekt 1 oder 2, das den folgenden Schritt aufweist:
Bestimmen, ob ein jeweils nächster Schritt der Ablaufsteuerung hierarchisch ist oder nicht, um dadurch zu bestimmen, ob ausgehend von einer vorhergehenden Gruppe von Objekten die nachfolgenden über Verknüpfungsobjekte gefundenen Objekte als mehrere Gruppen definiert sind oder ob die mehreren Gruppen als eine Gesamtgruppe zu behandeln sind, um dadurch eine kettenartige oder baumartige Navigation zu bestimmen.

Ein Aspekt 4 schafft ein Verfahren nach einem der vorhergehenden Aspekte, wobei am Ende oder an einem Zwischenschritt der Abaufsteuerung stehende Objekte aus der Gruppe ausgewählt ist, die Datenobjekte, Prozessierungsobjekte, Klassenobjekte, Verknüpfungsobjekte und lokal verknüpfte Variablen aufweist.

Gemäß Aspekt 5 können bei dem Verfahren nach einem der vorhergehenden Aspekte ausgewählte Algorithmen Objekte strukturell ändern, Informationen innerhalb der Objekte in Variablen aufnehmen und Variablen in die Objekte ablegen.

Aspekt 6 betrifft ein Verfahren nach einem der vorhergehenden Aspekte, wobei Verknüpfungsobjekte dadurch teilweise bedingungsabhängig erzeugt oder vernichtet werden, dass mehrere ausgewählte Gruppen innerhalb der Ablaufsteuerung oder unabhängig von der Ablaufsteuerung ausgewählt werden und Gruppenmitglieder der mehreren Gruppen durch Verknüpfungsobjekte miteinander verknüpft werden oder deren Verknüpfungsobjekte gelöscht werden.

Aspekt 7 ist ein Verfahren nach einem der vorhergehenden Aspekte, wobei heterogene Objekte dadurch bedingungsabhängig erzeugt werden, dass mehrere ausgewählte Gruppen innerhalb der Ablaufsteuerung oder unabhängig von der Ablaufsteuerung ausgewählt werden und Gruppenmitglieder der mehreren Gruppen zusammengenommen als neue hierarchisch übergeordnete Objekte definiert werden.

Aspekt 8 betrifft ein Verfahren nach Aspekt 7, wobei sich Bedingungen auf Eigenschaften eines zu erzeugenden hierarchisch übergeordneten Objekts beziehen.

Aspekt 9 ist Ein Verfahren nach einem der vorhergehenden Aspekte, wobei Klassenobjekte über Verknüpfungsobjekte, welche als Teil der Ablaufsteuerung auswählbar sind, miteinander verknüpft sind und Eigenschaften speichern, die entsprechende und deren Verknüpfungsobjekte kennzeichnen und für einschränkende Bedingungen in der Ablaufsteuerung verwendet werden.

Aspekt 10 ist ein Verfahren nach einem der vorhergehenden Aspekte, wobei die zu analysierenden Daten und die Datenobjekte heterogen sind und ein Zugriff auf die Daten und die Datenobjekte homogen erfolgt.

Bei einem Aspekt 11 kann der heterogene Datensatz des Verfahrens nach Aspekt 10 mehrere unterschiedliche Schnittbilder aufweisen, die zusammen ein n-dimensionales Bild darstellen, wobei n eine Ganzzahl von gleich oder größer als drei ist und wobei die Zeit zum Erfassen von zeitlichen Veränderungen eine Dimension ist und Wissensobjekte insoferrn heterogen sind, als dass sie sowohl zweidimensionale Schnitte der n-dimensionalen Datenobjekte als auch dreidimensionale und n-dimensionale Objekte beschreiben.

Gemäß einem Aspekt 12 weist der heterogene Datensatz des Verfahrens nach Aspekt 10 oder 11 eine Tabelle auf, die heterogene Einträge aufweist.

Aspekt 13 betrifft das Verfahren nach einem der Aspekte 10 bis 12, wobei der heterogene Datensatz Textdokumente aufweist, die heterogene Inhalte aufweisen.

Aspekt 14 ist ein Verfahren nach einem der Aspekte 10 bis 13, wobei der heterogene Datensatz mehrere ähnliche oder unterschiedliche Bilder darstellt, die in einem Sinnzusammenhang stehen.

Aspekt 15 betrifft ein Verfahren nach einem der Aspekte 10 bis 14, wobei der heterogene Datensatz ein Computerprogramm aufweist, welches während einer Interaktion des Computerprogramms mit Datenobjekten zum Deuten der Richtigkeit der Datenobjekte das Computerprogramm mit dem Ziel, die Richtigkeit des Deutens der Daten zu verbessern, vom einem übergeordneten Computerprogramm-Optimierungsprogramm hierarchisch klassifiziert, segmentiert und geändert wird.

Gemäß einem Aspekt 16 weist ein computerimplementiertes Verfahren zum automatischen wissensbasierten Erzeugen von anwenderrelevanten Daten die folgenden Schritte auf:
Auswählen von allgemeinen Start-Objekten anhand von Eigenschaften und Namen von Objekten, die Datenobjekte, Klassenobjekte, Prozessierungsobjekte und Verknüpfungsobjekte aufweisen;
Navigieren zu neuen allgemeinen Objekten, die ebenso durch Namen und Eigenschaften definiert werden; und
Erzeugen einer Baumstruktur von Gruppen von allgemeinen Objekten durch wiederholtes Durchführen des Navigierens ausgehend von den neuen allgemeinen Objekten als neue allgemeine Startobjekte.

## Patentansprüche

1. Computerimplementiertes Verfahren zur automatischen wissensbasierten Erzeugung von Daten aus einer Tabelle, mit den folgenden Schritten:
a) Definieren einer ersten Klasse der Klassenhierarchie, die eine Gruppe von Daten-Objekten einer Tabelle mit Hilfe einer ersten Klassenbeschreibung beschreibt,
b) Generieren eines hierarchisch übergeordneten Daten-Objektes, das eine Gruppe von Daten-Objekten aus der Tabelle repräsentiert, wobei für die Gruppe die erste Klassenbeschreibung zutrifft, und
c) Berechnen einer Eigenschaft des übergeordneten Objektes,
**dadurch gekennzeichnet,**
**dass** die Eigenschaft des übergeordneten Objekts anhand der Eigenschaften der Daten-Objekte berechnet wird.

2. Computerimplementiertes Verfahren nach Anspruch 1, wobei bei der Berechnung der Eigenschaft des übergeordneten Objekts nur diejenigen Daten-Objekte berücksichtigt werden, die vordefinierte Eigenschaften besitzen.

3. Computerimplementiertes Verfahren nach Anspruch 1 oder 2, wobei eine oder mehrere neue Eigenschaften der Daten-Objekte aus Eigenschaften des übergeordneten Objekts berechnet wird.

4. Computerimplementiertes Verfahren nach einem der vorhergehenden Ansprüche, wobei eine Eigenschaft des übergeordneten Objekts in einer grafischen Benutzeroberfläche visualisiert wird.

5. Computerimplementiertes Verfahren nach Anspruch 3, wobei die eine oder mehreren neuen Eigenschaften der Daten-Objekte in einer grafischen Benutzeroberfläche visualisiert werden.

6. Computerimplementiertes Verfahren nach einem der vorhergehenden Ansprüche, wobei alle Daten-Objekte einer Gruppe beim Selektieren eines Gruppen-Mitglieds in einer grafischen Benutzeroberfläche visualisiert werden.

7. Computerimplementiertes Verfahren nach einem der vorhergehenden Ansprüche, wobei in Schritt a) eine zweite Klasse definiert wird, und wobei eine vordefinierte Eigenschaft der Daten-Objekte ihre Zugehörigkeit zu der zweiten Klasse ist.

8. Computerimplementiertes Verfahren nach einem der vorhergehenden Ansprüche, wobei die berechnete Eigenschaft in einer lokalen Variablen des übergeordneten Daten-Objekts gespeichert wird.
